# EUROPÄISCHE PATENTSCHRIFT

(11) **EP 1 213 242 B1**
(45) Veröffentlichungstag und Bekanntmachung des Hinweises auf die Patenterteilung: **10.03.2004**
(21) Anmeldenummer: 01128018.7
(22) Anmeldetag: 26.11.2001
(51) Int. Cl.: B65G 47/88, B65G 1/02, B65G 1/08, B65G 13/075

(54) **Durchlaufregal für Kommissionierzwecke**
Gravity feed rack for order picking
Etagère inclinée pour la préparation de commandes

(30) Priorität: 05.12.2000 DE 20020595 U
(43) Veröffentlichungstag der Anmeldung: 12.06.2002
(73) Patentinhaber: NEDCON MAGAZIJNINRICHTING B.V., NL-7000 AA Doetinchem (NL)
(72) Erfinder: de Jong, Leen-Pieter, 7051 GN Varsseveld (NL)
(74) Vertreter: Christophersen & Partner

(56) Entgegenhaltungen:
- EP-A- 0 968 938
- DE-U- 20 020 595
- DE-U- 29 711 710
- US-A- 4 809 836
- US-B1- 6 220 418

## Beschreibung

Die Erfindung betrifft ein Durchlaufregal für Kommissionierzwecke, mit vorzugsweise in mehreren Etagen übereinander angeordneten und zur Kommissionierseite hin geneigten Laufbahnen, auf denen Lagereinheiten unter Schwerkrafteinfluß von der Beschickungsseite her bis in eine Entnahmeposition gelangen, und mit jeweils mindestens einem an den Laufbahnen angeordneten Rückhalteelement zum Zurückhalten einer Lagereinheit in einer der Entnahmeposition in Bewegungsrichtung vorgelagerten Position, wobei das Rückhalteelement auf einer ortsfesten Drehachse gelagert entgegen einer Rückstellkraft aus einer Grundstellung heraus in gegensinnige Schwenkrichtungen auslenkbar ist.

Ein Durchlaufregal besteht aus einem ortsfesten Lagergestell, entlang dem sich die Lagereinheiten bewegen können. Bei den Lagereinheiten handelt es sich zumeist um Stückgüter oder um standardisierte Container, in denen die zu kommissionierenden Waren angeordnet sind. Unter dem Begriff Lagereinheit lassen sich im Rahmen der vorliegenden Erfindung außerdem sämtliche Arten an Sichtlagerkästen, Stapelbehältern mit und ohne Sichtöffnung, Lager- und Transportbehältem sowie Kartons und Einzelgebinden verstehen, soweit in diesen Lagergut aufbewahrt wird. Zu Kommissionierzwecken eignen sich Durchlaufregale vor allem aufgrund der zu erzielenden hohen Umschlaghäufigkeit sowie des hohen Flächen- und Raumnutzungsgrades. Beim Einsatz als Kommissionierregale werden die Durchlaufregale von der Beschickungsseite her mit Lagereinheiten bestückt, während eine bedarfsorientierte Entnahme auf der gegenüberliegenden Kommissionierseite erfolgt. Bei der Kommissionierung selbst kann zwischen einer einstufigen oder auftragsbezogenen und einer mehrstufigen oder artikelbezogenen Kommissionierung unterschieden werden. Beim auftragsbezogenen Kommissionieren wird ein Auftrag in einem Arbeitsprozeß zusammengestellt, d. h. die Positionen eines Auftrages werden zusammenhängend erledigt. Beim artikelbezogenen Kommissionieren hingegen werden in einer ersten Stufe gleiche Artikel für mehrere Aufträge gesammelt und in einer zweiten Stufe den entsprechenden Aufträgen zugeordnet. Vor allem in letzterem Fall werden die Kommissonierstationen als Wechselplätze betrieben, bei denen der Arbeitsplatz des Kommissionierers ortsfest ist und die Warenbereitstellung dynamisch erfolgt, d. h. das Lagergut wird mittels spezieller Regalfördergeräte aus seinem Lagerort herausgeholt und der Kommissionierstation zugeführt.

Bei Durchlaufregalen wird die Lagereinheit von der Beschickungsseite her unter Schwerkrafteinfluß in die Entnahmeposition an der Kommissionierseite bewegt. Nach erfolgter Kommissionierung wird die Lagereinheit in eine Warteposition geschoben, in der sie von einem Regalfördergerät ergriffen und damit wieder abgeholt werden kann. Bei solchen Durchlaufregalen ist von Nachteil, daß zum Festhalten der Lagereinheit in der Warteposition zunächst eine Sperrvorrichtung durch die kommissionierende Person zu betätigen ist. Für die kommissionierende Person stellt dies einen zusätzlichen Handgriff dar, was sich in der Praxis sowohl in einer reduzierten Kommissionierleistung äußert, als auch in einem erhöhten Konzentrationsaufwand und damit in einer gesteigerten Streßbelastung für die kommissionierende Person.

Aus der deutschen Gebrauchsmusterschrift 297 11 710 ist bereits ein verbessertes Durchlaufregal bekannt, bei dem es nicht erforderlich ist, zur Zurückführung der Lagereinheit von der Kommissionierposition in die vorgelagerte Warteposition zunächst aktiv eine Sperre zu betätigen. Vielmehr dient als Sperre ein um eine ortsfeste Drehachse schwenkbarer Winkel, der mittels einer Feder in einer Grundstellung gehalten wird, aus der heraus der Winkel in gegensinnigen Schwenkrichtungen verschwenkbar ist. Durch Entlangbewegen einer Lagereinheit wird der Winkel entgegen der Wirkung der Feder aus seiner Grundstellung ausgelenkt, so daß der Winkel mit seinem einen Schenkel an der Lagereinheit vorbei streicht. Ist die Lagereinheit soweit zurückgeschoben, daß deren rückwärtige Kante den einen, kürzer ausgebildeten der beiden Schenkel verläßt, führt dies infolge der Federkraft zu einem Zurückschnellen des Winkels, wobei sich dieser mit seinem anderen, längeren Schenkel flächig an die Außenseite des Stückgutes anlegt. Wird bei Erreichen dieses Zustandes die Lagereinheit losgelassen, kann sie wieder etwas nach vorne rollen, stößt dann jedoch unmittelbar an den wie eine Sperre wirkenden kurzen Schenkel des Winkels. In dieser Stellung ist die Lagereinheit dann sicher arretiert.

Das Zurückschieben der Lagereinheit in der beschriebenen Weise muß allerdings sorgfältig erfolgen. Wird die Lagereinheit etwas zu weit zurückgeschoben, so schnellt der Winkel nicht nur mit seinem kurzen Schenkel, sondern anschließend auch mit seinem längeren Schenkel zurück, wodurch der Winkel insgesamt wieder seine Grundposition einnimmt, in der eine Arretierung nicht möglich ist. Bei der Konstruktion nach dem Gebrauchsmuster 297 11 710 muß daher die Lagereinheit von dem Benutzer gleichsam "bis auf den Punkt" zurückgeschoben und dann losgelassen werden. Da dieses exakte Arbeiten in der Praxis Schwierigkeiten bereitet, ist an der Laufbahn zusätzlich ein Anschlag vorgesehen, der bei Bewegung der Lagereinheit von der Entnahmeposition in die Warteposition die Lagereinheit daran hindert, daß diese zu weit zurückbewegt wird. Der Anschlag stellt in Bezug auf die Fertigung und Montage des Durchlaufregals eine zusätzliche Baueinheit dar, die aus einer gelenkig gelagerten Klappe besteht, welche mittels einer Druckfeder bis über die Transportebene der Laufbahn hervorsteht.

Der Erfindung liegt die **Aufgabe** zugrunde, ein Durchlaufregal der voranstehend beschriebenen Art konstruktiv einfacher zu gestalten, wobei zusätzliche Anschläge, die ein versehentlich zu weites Zurückschieben der Lagereinheiten verhindern, vermeidbar sein sollen.

Zur **Lösung** wird bei einem gattungsgemäßen Durchlaufregal für Kommissionierzwecke vorgeschlagen, daß das Rückhalteelement eine Klemmfläche mit einem Material und/oder einer Oberflächenstruktur mit hohem Reibwert aufweist, und daß sich die Lagereinheit im zurückgehaltenen Zustand ausschließlich über die Klemmfläche gegen das Sperrelement abstützt.

Die Erfindung macht sich daher zunutze, daß das Rückhalteelement, bezogen auf seine ortsfest gelagerte Drehachse, nach Art eines Exzenters arbeitet. Dieser klemmt sich an der Außenseite der Lagereinheit fest, wobei die Klemmkraft auch auf der Gewichtskraft der auf der geneigten Laufbahn aufliegenden Lagereinheit beruht. Von Bedeutung ist hierbei eine entsprechend gute Griffigkeit zwischen der Klemmfläche des Rückhalteelements und dem Boden oder der Seitenfläche der Lagereinheit. Zu diesem Zweck weist die Klemmfläche ein Material und/oder eine Oberflächenstruktur mit hohem Reibwert auf.

Das gegenseitige Verklemmen von Rückhalteelement und Oberfläche der Lagereinheit wird unabhängig von der gegenseitigen Position von Rückhalteelement einerseits und Lagereinheit andererseits erzielt, so lange nur die Anlage der Klemmfläche - irgendwo - an der Außenseite der Lagereinheit sichergestellt ist. Um die Lagereinheit daher von der Entnahmeposition in eine in Bewegungsrichtung vorgelagerte Position zurückzuschieben und dort zu arretieren, ist es daher, anders als bei der Konstruktion nach der deutschen Gebrauchsmusterschrift 297 11 710 nicht erforderlich, die Lagereinheit bis zu einem ganz bestimmten Punkt zurückzuschieben, und nicht über diesen Punkt hinaus. Beim Stand der Technik wird ein solches zu weites Zurückschieben zwar letztlich durch eine Sperre verhindert, jedoch kann eine solche Sperre bei einem erfindungsgemäß ausgeführten Durchlaufregal vollständig entfallen, wodurch dieses konstruktiv einfacher gestaltet werden kann.

Bei einer bevorzugten Weiterbildung des Durchlaufregals ist vorgesehen, daß das Rückhalteelement bei zurückgehaltener Lagereinheit eine Stellung einnimmt, in der die Klemmfläche in Bezug auf die Drehachse zur Beschickungsseite hin versetzt angeordnet ist und in der der Abstand zwischen der Klemmfläche und der Drehachse größer ist als der kürzeste Abstand zwischen der Außenseite der zurückgehaltenen Lagereinheit und der Drehachse.

Das Rückhalteelement nimmt normalerweise, d. h. wenn es seine Klemmfunktion nicht ausübt, eine Normalstellung ein, in der das Rückhalteelement bis über die Transportebene der Laufbahn herausragt. In dieser neutralen Position wird das Rückhalteelement durch eine Rückstellkraft gehalten, die gemäß einer ersten Ausführungsform durch die Gewichtsverteilung innerhalb des Rückhalteelements erzeugt wird. Gemäß einer zweiten Ausführungsform kann die auf das Rückhalteelement wirkende Rückstellkraft auch durch eine zusätzliche Feder ausgeübt werden.

Weitere Vorteile und Einzelheiten des Gegenstandes der Erfindung ergeben sich aus der nachfolgenden Beschreibung der zugehörigen Zeichnung, in der eine bevorzugte Ausführungsform dargestellt ist. Darin zeigen:
- Fig. 1: in einer Seitenansicht einen Teil einer Laufbahn eines aus frei drehbaren Walzen zusammengesetzten Durchlaufregals einschließlich einer auf den Walzen entlangrollenden Lagereinheit;
- Fig. 2: eine der Fig. 1 entsprechende Darstellung zu einem Zeitpunkt, zu dem die Lagereinheit die Laufbahn bereits weiter hinunter gerollt ist;
- Fig. 3: eine wiederum der Fig. 1 entsprechende Darstellung, wobei die Lagereinheit mit einer diese zurückschiebenden Kraft beaufschlagt wird;
- Fig. 4: eine wiederum der Fig. 1 entsprechende Darstellung, wobei die Lagereinheit eine arretierte Position einnimmt und
- Fig. 5: eine vergrößerte Darstellung der in Fig. 4 mit V bezeichneten Einzelheit, wobei zusätzlich eine Feder zur Erzeugung einer Rückstellkraft vorgesehen ist.

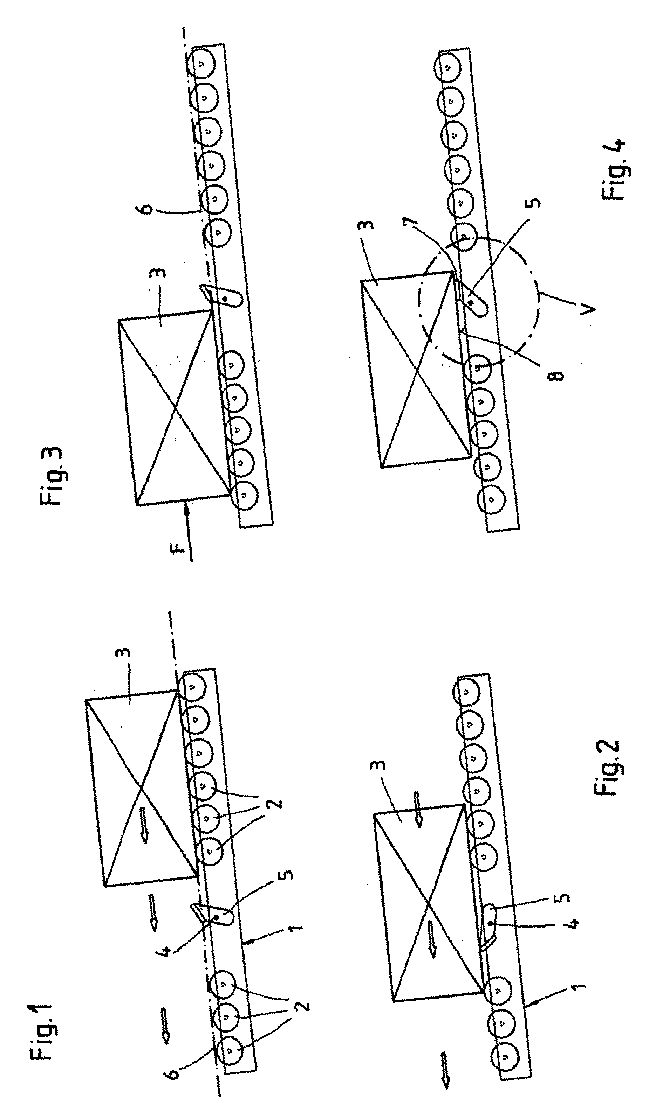

Die Fign. 1 bis 4 zeigen in verschiedenen Verfahrensstadien die Seitenansicht einer Laufbahn, die wiederum Bestandteil eines vorzugsweise mehrstöckigen Durchlaufregals für Kommissionierzwecke ist. Die Laufbahn 1 ist zu der auf der Zeichnung links angeordneten Komissionierseite hin geneigt und mit einer Vielzahl nicht angetriebener Rollen oder Walzen 2 versehen. Auf diesen Rollen bzw. Walzen 2 rollen die Lagereinheiten 3 unter dem Einfluß der Schwerkraft von rechts nach links und damit von einer Beschickungsseite des Durchlaufregals zu der Kommissionierseite hin.

Nachdem die Lagereinheit 3 die Kommissionierseite erreicht hat, kommt sie dort an einem nicht dargestellten Stopelement zur Ruhe. Die Lagereinheit 3 befindet sich dann in einer Entnahmeposition, in der die mit der Kommissionierung beauftragte Person Gegenstände und insbesondere Waren gemäß Kommissionsauftrag aus der Lagereinheit 3 entnehmen kann. Ist die Ware aus der Lagereinheit 3 entnommen, so ist es nicht wünschenswert, daß sich die Lagereinheit 3 weiterhin in der Entnahmeposition am linken, unteren Ende der Laufbahn 1 befindet. Vielmehr wird die Lagereinheit 3 dann von Hand entlang der Laufbahn und entgegen der Schwerkraft bis in eine Warteposition zurückgeschoben, die der Entnahmeposition in Bewegungsrichtung vorgelagert ist. Die Warteposition ist derart, daß die Lagereinheit 3 dort von einem Regalbediengerät ergriffen und in eine reine Lagerebene des Regals zurückbefördert werden kann. Sobald ein erneuter Kommissionierauftrag für die betreffende Warengruppe vorliegt, wird die Lagereinheit dann wieder auf dem Beschickungsende der Laufbahn abgesetzt, so daß sie wiederum nach vorne bis in die Entnahmeposition herunterrollen kann.

In der Laufbahn befindet sich, drehbar auf einer ortsfesten Drehachse 4, ein Rückhalteelement 5. Infolge einer Rückstellkraft nimmt das Rückhalteelement 5 in unbetätigtem Zustand die in Fig. 1 dargestellte Stellung ein, bei der das Rückhalteelement 5 nach oben hin aus der Transportebene 6 der Laufbahn herausragt. Infolge dieses Herausragens wird, wie Fig. 2 erkennen läßt, beim Hinabrollen der Lagereinheit 3 das Rückhalteelement 5 beiseite geschwenkt, so daß die Lagereinheit 3 das Rückhalteelement 5 ohne weiters passieren kann.

In Fig. 3 ist die Situation dargestellt, bei der die Lagereinheit 3 von Hand und entgegen der Schwerkraft zurückgeschoben wird, was in Fig. 3 mit dem Kraftpfeil F symbolisiert ist. Wiederum wird das Rückhalteelement 5 von der vordersten Kante der Lagereinheit 3 erfaßt und um die Drehachse 4 beiseite geschwenkt, diesmal in die andere Schwenkrichtung.

Hierbei legt sich, wie Fig. 4 erkennen läßt, das Rückhalteelement 5 mit einer daran ausgebildeten Klemmfläche 7 von unten gegen die Außenseite 8 der Lagereinheit 3, beim Ausführungsbeispiel ist dies der Boden der Lagereinheit. Wird nun, also bei an der Außenseite 8 anliegender Klemmfläche 7, die Lagereinheit 3 losgelassen, rollt gleichwohl die Lagereinheit 3 nicht zurück, da sie von dem Rückhalteelement 5 zurückgehalten und damit blockiert wird.

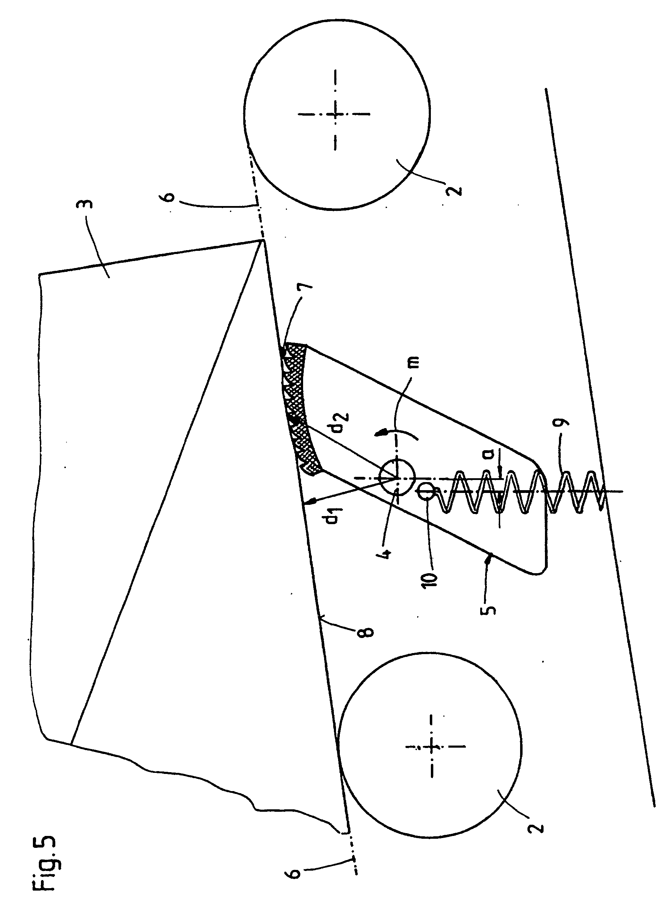

Einzelheiten des Rückhalteelements werden nachfolgend anhand der Fig. 5 erläutert. Das Rückhalteelement 5 hat die Gestalt eines doppelten Hebels, der auf der ortsfesten Drehachse 4 gelagert ist. Die Drehachse 4 ist vorzugsweise an einem Profil befestigt, in welchem die einzelnen Rollen bzw. Walzen 2 der Laufbahn 1 gelagert sind. Fig. 5 zeigt die Lagereinheit 3 in zurückgehaltenem Zustand, d. h. die Lagereinheit 3 wird durch das klemmend daran anliegende Rückhalteelement 5 gegen ein Herabrollen blockiert. Hierzu besteht die ausschließlich an der Unterseite oder alternativ an den Seitenflächen der Lagereinheit anliegende Klemmfläche 7 des Rückhalteelements 5 aus einem Material mit hohem Reibwert, z. B. Gummi. Alternativ hierzu oder ergänzend kann die Klemmfläche 7 mit einer zur Erzielung eines hohen Reibwertes günstigen Oberflächenstruktur versehen sein. Beim Ausführungsbeispiel ist die Klemmfläche 7 hierzu gezahnt. Außerdem ist die Klemmfläche 7, wie Fig. 5 erkennen läßt, leicht ballig geformt, was ebenfalls zu einem hohen Klemmdruck gegen die nach unten weisende Außenseite 8 der Lagereinheit 3 führt.

Das Rückhalteelement 5 arbeitet in dieser Position nach Art eines Exzenters, da der Abstand d₂ zwischen der Klemmfläche 7 und der Drehachse 4 größer ist als der kürzeste Abstand d₁ zwischen der Außenseite 8 der zurückgehaltenen Lagereinheit und der Drehachse 4. Aufgrund dieser geometrischen Verhältnisse entsteht eine Verspannung des Rückhalteelements 5 zwischen einerseits seiner Klemmfläche 7 und andererseits seiner Drehachse 4.

Damit das Rückhalteelement 5 die beschriebene Blockierstellung einnimmt und beibehält, ist ein auf das Rückhalteelement 5 einwirkendes Drehmoment m erforderlich. Dieses Drehmoment m ist bestrebt, das Rückhalteelement 5 aus der in Fig. 5 dargestellten Arbeitsstellung in die z. B. in den Fign. 1 und 3 dargestellte Grundstellung zu überführen. Zur Erzeugung des Drehmomentes m ist beim Ausführungsbeispiel nach Fig. 5 eine Feder 9 vorgesehen, die einerseits an einem Zapfen 10 des Rückhalteelements 5, und andererseits an einem ortsfesten Punkt angreift. Der Mittelpunkt des Zapfens 10 ist um den Abstand a in Bezug auf den Mittelpunkt der Drehachse 4 vorversetzt, wodurch aus der Zugkraft der Feder 9 das Drehmoment m resultiert.

Die Erzeugung des Drehmoments m und damit der Rückstellkraft auf das Rückhalteelement 5 muß jedoch nicht mit Federmitteln erfolgen. Ebenso ist es möglich, die Rückstellkraft durch die Gewichtsverteilung innerhalb des Rückhalteelements 5 zu erzeugen. Hierzu ist das Material des Rückhalteelements in Bezug auf die Drehachse 4 so anzuordnen, daß das Rückhalteelement allein aufgrund des Schwerkrafteinflusses bestrebt ist, aus der aktiven Lage gemäß Fig. 5 in die passive Lage gemäß den Fign. 1 und 3 zu verschwenken.

### Bezugszeichenliste

- 1: Laufbahn
- 2: Rolle, Walze
- 3: Lagereinheit
- 4: Drehachse
- 5: Rückhalteelement
- 6: Transportebene
- 7: Klemmfläche
- 8: Außenseite
- 9: Feder
- 10: Zapfen
- a: Abstand
- d₁: Abstand
- d₂: Abstand
- F: Kraft
- m: Rückstellmoment

## Patentansprüche

1. Durchlaufregal für Kommissionierzwecke mit vorzugsweise in mehreren Ebenen übereinander angeordneten und zur Kommissonierseite hin geneigten Laufbahnen (1), auf denen Lagereinheiten (3) unter Schwerkrafteinfluß von der Beschickungsseite her bis in eine Entnahmeposition gelangen, und mit jeweils mindestens einem an den Laufbahnen (1) angeordneten Rückhalteelement (5) zum Zurückhalten einer Lagereinheit (3) in einer der Entnahmeposition in Bewegungsrichtung vorgelagerten Position, wobei das Rückhalteelement (5) auf einer ortsfesten Drehachse (4) gelagert entgegen einer Rückstellkraft aus einer Grundstellung heraus in gegensinnige Schwenkrichtungen auslenkbar ist,
**dadurch gekennzeichnet,**
**daß** das Rückhalteelement (5) eine Klemmfläche (7) mit einem Material und/oder einer Oberflächenstruktur mit hohem Reibwert aufweist, und daß sich die Lagereinheit (3) im zurückgehaltenen Zustand ausschließlich über die Klemmfläche (7) gegen das Rückhalteelement (5) abstützt.

2. Durchlaufregal nach Anspruch 1, **dadurch gekennzeichnet, daß** das Rückhalteelement (5) bei zurückgehaltener Lagereinheit (3) eine Stellung einnimmt, in der die Klemmfläche (7) in Bezug auf die Drehachse (4) zur Beschickungsseite hin versetzt angeordnet ist, und in der der Abstand (d₂) zwischen der Klemmfläche (7) und der Drehachse (4) größer ist als der kürzeste Abstand (d₁) zwischen der Außenseite (8) der zurückgehaltenen Lagereinheit und der Drehachse (4).

3. Durchlaufregal nach Anspruch 1 oder Anspruch 2, **dadurch gekennzeichnet, daß** die auf das Rückhalteelement (5) wirkende Rückstellkraft durch die Gewichtsverteilung innerhalb des Rückhalteelements (5) erzeugt wird.

4. Durchlaufregal nach Anspruch 1 oder Anspruch 2, **dadurch gekennzeichnet, daß** die auf das Rückhalteelement (5) wirkende Rückstellkraft durch eine Feder (9) ausgeübt wird.

## Claims

1. Dynamic storage rack for order-picking purposes, having running tracks (1) which are arranged one above the other preferably on a number of levels, are inclined in the direction of the order-picking site and on which storage units (3) pass, under the influence of gravitational force, from the charging side into a removal position, and having in each case at least one restraining element (5) which is arranged on the running tracks (1) and is intended for restraining a storage unit (3) in a position which is upstream of the removal position, as seen in the movement direction, it being possible for the restraining element (5), mounted on a stationary swivel pin (4), to be deflected out of a basic position, counter to a restoring force, in opposite pivoting directions, **characterized in that** the restraining element (5) has a clamping surface (7) with a material and/or a surface structure with a high coefficient of friction, and **in that** the storage unit (3), in the restrained state, is supported against the restraining element (5) exclusively via the clamping surface (7).

2. Dynamic storage rack according to Claim 1, **characterized in that**, with the storage unit (3) restrained, the restraining element (5) assumes a position in which the clamping surface (7) is offset, in respect of the swivel pin (4), in the direction of the charging side and in which the distance (d₂) between the clamping surface (7) and the swivel pin (4) is greater than the shortest distance (d₁) between the outer side (8) of the restrained storage unit and the swivel pin (4).

3. Dynamic storage rack according to Claim 1 or Claim 2, **characterized in that** the restoring force acting on the restraining element (5) is produced by the weight distribution within the restraining element (5).

4. Dynamic storage rack according to Claim 1 or Claim 2, **characterized in that** the restoring force acting on the restraining element (5) is exerted by a spring (9).

## Revendications

1. Etagère de stockage dynamique pour la préparation de commandes, avec des bandes de roulement (1) disposées de préférence les unes sur les autres sur plusieurs niveaux et inclinées du côté de la préparation des commandes, sur lesquelles des unités stockées (3) parviennent par gravité du côté du chargement à une position de déstockage et avec au moins chaque fois un élément de retenue (5) disposé sur les bandes de roulement (1) pour retenir une unité stockée (3) dans une position située, dans le sens du mouvement, en amont des positions de déstockage, que l'élément de retenue (5) monté sur un axe de rotation fixe (4) pouvant pivoter à l'encontre d'une force de rappel à partir d'une position de base dans des sens de rotation opposés, **caractérisée en ce que** l'élément de retenue (5) comporte une surface de blocage (7) avec un matériau et/ou une structure de surface doté d'un coefficient de frottement élevé et **en ce que** l'unité stockée (3) s'appuie en situation de retenue exclusivement par l'intermédiaire de la surface de blocage (7) contre l'élément de blocage (5).

2. Etagère de stockage dynamique selon la revendication 1, **caractérisée en ce que** l'élément de retenue (5) occupe une position, pour une unité stockée retenue (3) dans laquelle la surface de blocage (7) est disposée décalée par rapport à l'axe de rotation (4) du côté du chargement et dans laquelle l'intervalle (d₂) entre la surface de blocage (7) et l'axe de rotation (4) est plus grand que l'intervalle le plus court (d₁) entre le côté extérieur (8) de l'unité stockée retenue et l'axe de rotation (4).

3. Etagère de stockage dynamique selon la revendication 1 ou la revendication 2, **caractérisée en ce que** la force de rappel agissant sur l'élément de retenue (5) est produite par la répartition du poids à l'intérieur de l'élément de retenue (5).

4. Etagère de stockage dynamique selon la revendication 1 ou la revendication 2, **caractérisée en ce que** la force de rappel agissant sur l'élément de retenue (5) est exercée par un ressort (9).
